# EUROPÄISCHE PATENTSCHRIFT

(11) **EP 1 886 896 B1**
(45) Veröffentlichungstag und Bekanntmachung des Hinweises auf die Patenterteilung: **03.03.2010**
(21) Anmeldenummer: 07113027.2
(22) Anmeldetag: 24.07.2007
(51) Int. Cl.: B62D 1/183, B62D 1/18

(54) **Lenksäule mit leichtem Einstieg und Positionsspeicher**
Steering column with easy entry and memory function
Colonne de direction avec accés fasile et mémoire de position

(30) Priorität: 11.08.2006 DE 102006037583
(43) Veröffentlichungstag der Anmeldung: 13.02.2008
(73) Patentinhaber: ZF-Lenksysteme GmbH, 73527 Schwäbisch Gmünd (DE)
(72) Erfinder: Heintschel, Manfred, 73525, Schwäbisch Gmünd (DE); Kogel, Walter, 73453, Abtsgmünd (DE); Dieterle, Günter, 73547, Lorch (DE)

(56) Entgegenhaltungen:
- DE-A1- 3 638 162
- JP-A- 63 235 165
- JP-A- 63 269 779
- US-A- 4 934 737
- US-A1- 2001 048 362
- US-A1- 2004 119 275

## Beschreibung

Die vorliegende Erfindung betrifft eine Lenksäule für ein Nutzfahrzeug mit einer in einem Lagerbock aufgenommenen Lenkspindel, an der ein Lenkrad angeordnet ist, wobei im Lagerbock ein Führungsblech zum Einstellen des Lenkradhubs und ein zwischen zwei Führungsblechenden angeordnetes Schwenkgelenk zum Einstellen der Neigung des Lenkrads vorgesehen ist, wobei das Schwenkgelenk mit einem oberen Ende eines längsblockierbaren Bindeglieds gelenkig verbunden ist.

Bei herkömmlichen Lenksäulen für Nutzfahrzeuge gibt es derzeit im wesentlichen zwei Varianten. Die erste und auch die unbequemste Variante ist eine starre, nicht einstellbare Lenksäule, die sich nicht an die Größe und Gestalt des Fahrers anpassen lässt. Außerdem lässt sich diese Lenksäule nicht zum Aus- und Einsteigen wegklappen.

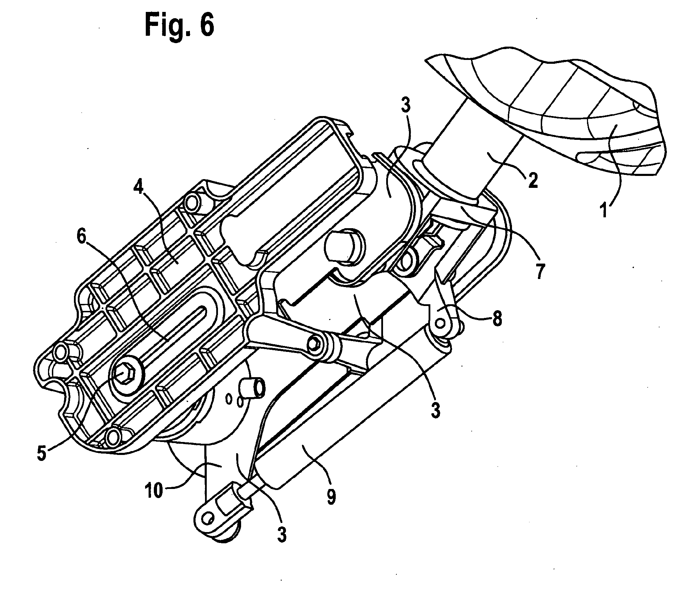

Bei der zweiten etwas verbesserten Variante lässt sich das Lenkrad in der Höhe und in der Neigung einstellen. Diese Variante ist schematisch und perspektivisch in Figur 6 dargestellt. Dabei ist ein Lenkrad 1 an einer nicht dargestellten Lenkspindel befestigt, die in einem Lenkspindelgehäuse 2 drehbar aufgenommen ist. Das Lenkspindelgehäuse 2 ist über ein Schwenkgelenk 7 stufenlos schwenkbar zwischen zwei Enden eines U-förmigen Führungsbleches 3 gelagert. Von dem Schwenkgelenk 7 steht ein erster Hebel 8 nach außen hervor, der mit einer feststellbaren Gasdruckfeder 9 verbunden ist. Das andere Ende der Gasdruckfeder 9 ist mit einem am unteren Ende des Führungsblechs 3 hervorstehenden zweiten Hebel 10 verbunden und über ein nicht dargestelltes Klemmelement in einer gewünschten Neigungsposition des Lenkrads 1 arretierbar.

Die beiden Schenkel des U-förmigen Führungsblechs 3 wiederum sind innerhalb eines Lagerbocks 4 längsverschiebbar aufgenommen. Dabei ist die Verbindung zwischen Lagerbock 4 und dem Führungsblech 3 über eine Verschraubung 5 realisiert, die jeweils in einem Langloch 6 im Lagerbock 4 verschiebbar ist. Über die Längsverschiebung der Führungsbleche 3 wird der Lenkradhub realisiert.

Beim Einstellen bzw. beim Verstellen der Lenksäule muss jedoch immer eine geeignete Position des Lenkrads durch Probieren gesucht werden. Dies ist insbesondere bei Nutzfahrzeugen im Verteilerverkehr nachteilig, da hier der Fahrer häufig ein- und aussteigen muss. Zwar lässt sich bei bekannten Lenksäulen dieser Variante das Lenkrad begrenzt wegschwenken, aber beim Wiedereinstieg muss der Fahrer die Lenkradeinstellung, d.h. die Einstellung der Neigung und der Höhe, völlig neu vornehmen, um seine optimale Fahrposition wieder zu finden.

DE-A-36 38 162 offenbart eine Lenksäule nach dem Oberbegriff des Anspruchs 1.

Aus dem PKW-Bau ist eine Verstellung der Lenksäule mit so genannter Memory-Funktion bekannt, die ein elektrisches Rückstellen des Lenkrads in eine vorher gespeicherte Position ermöglicht. Dies erleichtert das Aus- und Einsteigen nach längeren Fahrten und ermöglicht auch einen Fahrerwechsel und ein anschließendes Rückstellen in die Ausgangsposition.

Nachteilig bei dieser bekannten Lösung ist, dass die Bewegungsgeschwindigkeit dieser elektrisch betriebenen Memory-Einrichtung sehr langsam ist. Ferner ist der Verstellbereich der Lenksäule bei Nutzfahrzeugen wesentlich größer als bei PKWs. Daher würde sich die Lenksäule bei elektromotorisch betätigter Memory-Stellung nur sehr langsam in ihre Ausgangsposition bewegen. Diese Zeit ist bei einem Nutzfahrzeug häufig nicht vorhanden, insbesondere im Hinblick auf das häufige Ein- und Aussteigen, sowie Parken in zweiter Reihe.

Es ist daher die Aufgabe der vorliegenden Erfindung, eine Lenksäule für ein Nutzfahrzeug zur Verfügung zu stellen, die sowohl ein einfaches Ein- und Aussteigen, d.h. Easy-Entry, als auch einfaches Einstellen der Lenksäule in möglichst kurzer Zeit auf einfache Weise ermöglicht. Dabei soll die Lenkradeinstellung bei Nutzung der Easy-Entry Funktionalität voll erhalten bleiben. Ferner soll die Lösung kostengünstig sein und die oben beschriebenen Nachteile des Standes der Technik vermeiden.

Diese Aufgabe wird durch eine Lenksäule mit den Merkmalen des Patentanspruchs 1 gelöst. Vorteilhafte Ausführungsformen und Weiterbildungen der erfindungsgemäßen Lenksäule sind in den abhängigen Ansprüchen angegeben.

Eine erfindungsgemäße Lenksäule für ein Nutzfahrzeug mit einer in einem Lagerbock aufgenommenen Lenkspindel, an der ein Lenkrad angeordnet ist, wobei im Lagerbock ein Führungsblech zum Einstellen des Lenkradhubs und ein zwischen zwei Führungsblechenden angeordnetes Schwenkgelenk zum Einstellen der Neigung des Lenkrads vorgesehen ist, wobei das Schwenkgelenk mit einem oberen Ende eines längsblockierbaren Bindeglieds gelenkig verbunden ist, ist dadurch gekennzeichnet, dass zum Wegschwenken des Lenkrads ein gegenüber dem Führungsblech frei schwenkbarer Memoryarm vorgesehen ist, der mit dem unteren Ende des längsblockierbaren Bindeglieds gelenkig verbunden ist, und/oder zum Einschieben des Lenkrads ein frei verschiebbares Zwischenblech zwischen Lagerbock und Führungsblech angeordnet ist.

Hierdurch wird eine Lenksäule für ein Nutzfahrzeug zur Verfügung gestellt, die sowohl ein einfaches Ein- und Aussteigen, d.h. Easy-Entry, als auch einfaches Einstellen der Lenksäule in möglichst kurzer Zeit auf einfache Weise ermöglicht. Außerdem bleibt die Lenkradeinstellung, d.h. die voreingestellte Lenkradneigung und der Lenkradhub, bei Nutzung der Easy-Entry Funktionalität voll erhalten. Ferner wird eine kostengünstig Lösung zur Verfügung gestellt, welche die oben beschriebenen Nachteile des Standes der Technik vermeidet.

Vorteilhaft bei der erfindungsgemäßen Lösung ist es insbesondere, dass die beiden Memory-Funktionen, nämlich das Wegschenken des Lenkrads in eine Parkposition ohne Veränderung der voreingestellten Lenkradneigung und das Einschieben des Lenkrads in eine Parkposition ohne Veränderung des voreingestellten Lenkradhubs, getrennt voneinander ausführbar sind. Daher können konstruktiv jeweils eine der beiden Funktionen oder beide Funktionen gemeinsam wie bei einem Baukastensystem realisiert sein, je nach Ausgestaltung und Möglichkeiten des Nutzkraftfahrzeugs. Hierdurch wird der größtmögliche Freiraum zwischen Fahrersitz und Lenkrad zum Ein- und Aussteigen geschaffen. Dies erleichtert häufiges Ein- und Aussteigen insbesondere im Verteiler- und Lieferverkehr ganz erheblich.

Eine vorteilhafte Ausführungsform der vorliegenden Erfindung sieht vor, dass der hebelförmig ausgestaltete Memoryarm über ein vorzugsweise federbeaufschlagtes Rastelement feststellbar ist. Auch andere Arten von Rastelementen können hier zur Anwendung kommen, jedoch hat sich die Verwendung eines federbeaufschlagten Rastelements als vorteilhaft erwiesen, da dieses eine fail-safe Eigenschaft aufweist. In der Regel sind hier zwei Rasten, eine für den Fahrbetrieb und eine für die Parkstellung vorgesehen und ausreichend. Es sind aber auch Anwendungen denkbar, wo mehr als zwei Raststufen wünschenswert sind.

Eine weitere vorteilhafte Ausführungsform der vorliegenden Erfindung sieht vor, dass das separate Zwischenblech über ein vorzugsweise federbeaufschlagtes Rastelement feststellbar ist. Auch für die Verstellung des Zwischenblechs können andere Arten von Rastelementen zur Anwendung kommen, jedoch ist auch hier die fail-safe Funktion des federbeaufschlagten Rastelements vorteilhaft. In der Regel sind hier zwei Rasten, eine für den Fahrbetrieb und eine für die Parkstellung vorgesehen und ausreichend. Es sind aber auch Anwendungen denkbar, wo mehr als zwei Raststufen wünschenswert sind.

Noch eine vorteilhafte Ausführungsform der vorliegenden Erfindung sieht vor, dass das Rastelement eine Einrichtung zum Lösen aufweist. Diese Einrichtung zum Lösen des Restelements kann mechanisch, pneumatisch, elektrisch, hydraulisch oder durch eine andere geeignete Energieform betätigbar ist. So sind beispielsweise auch elektromagnetische Lösungen vorstellbar. Alle Lösevorrichtungen sind einfach und per Knopfdruck aus dem Fahrerhaus bedienbar.

Außerdem sieht eine weitere vorteilhafte Ausführungsform der vorliegenden Erfindung vor, dass das Zwischenblech im wesentlichen U-förmig ausgebildet ist und an beiden gegenüberliegenden Innenseiten des Lagerbocks verschiebbar ist. Dadurch können beispielsweise die beiden U-Schenkel in Führungseinrichtungen entlang der Innenwand des Lagerbocks entlang gleiten. Alternativ können auch zwei separate Zwischenbleche, eines für jede Seite des Lagerbocks, zur Anwendung kommen. Auch das Führungsblech kann entweder U-förmig oder zweigeteilt ausgeführt sein.

Noch eine besonders vorteilhafte Ausführungsform der vorliegenden Erfindung sieht vor, dass das Zwischenblech zumindest ein Langloch zum Einstellen des Lenkradhubs aufweist. Hierdurch kann das Führungsblech gegenüber dem Zwischenblech festgelegt werden aber gegenüber dem Lagerbock verschiebbar bleiben. Die Einstellung des Lenkradhubs bleibt dadurch während des Einschiebens und Ausziehens des Lenkrads unverändert.

Eine weitere vorteilhafte Ausführungsform der vorliegenden Erfindung sieht vor, dass der Memoryarm von einem ringförmigen Drehrahmen hervorsteht, der konzentrisch zu einem Federpaket zwischen den Führungsblechen angeordnet ist. Ferner sieht noch eine vorteilhafte Ausführungsform der vorliegenden Erfindung vor, dass an dem ringförmigen Drehrahmen ein Vorsprung zur Aufnahme des Restelements vorgesehen ist. Der Vorsprung ist gegenüber dem Lagerbock und dem Führungsblech entlang einem bogenförmigen Blech mit Arretierbohrungen frei drehbar, wenn das am Memoryarm montierte Rastelement gelöst ist. Hierdurch lässt sich der dem Vorsprung diametral gegenüberliegend am Drehrahmen angeordnete Memoryarm von der Parkstellung in die Fahrstellung und umgekehrt bewegen.

Schließlich sieht noch eine vorteilhafte Ausführungsform der vorliegenden Erfindung vor, dass das längsblockierbare Bindeglied als blockierbare Gasdruckfeder ausgestaltet ist. Über diese Gasdruckfeder wird mit dem entsprechenden Blockierelement die Lenkradneigung eingestellt. Für die Easy-Entry Funktion, d.h. für das Wegschwenken des Lenkrads fungiert die Gasdruckfeder dann nur noch als starre Schub- bzw. beim Zurückschwenken als Zugstange.

Weitere, die Erfindung verbessernde Maßnahmen sind in den Unteransprüchen angegeben oder werden nachfolgend gemeinsam mit der Beschreibung eines bevorzugten Ausführungsbeispiels der Erfindung anhand der Figuren näher dargestellt. Es zeigen:
- Fig. 1: eine schematische perspektivische Darstellung einer Lenksäule für ein Nutzfahrzeug gemäß einer Ausführungsform der vorliegenden Erfindung in Fahrposition;
- Fig. 2: eine schematische Schnittdarstellung eines Details aus Figur 1,
- Fig. 3: eine schematische Darstellung eines weiteren Details aus Figur 1,
- Fig. 4: eine schematische perspektivische Darstellung einer Lenksäule für ein Nutzfahrzeug gemäß einer Ausführungsform der vorliegenden Erfindung in Parkposition;
- Fig. 5: eine schematische Schnittdarstellung eines Details aus Figur 4; und
- Fig. 6: eine bekannte Lenksäule für Nutzfahrzeuge aus dem Stand der Technik mit herkömmlicher Lenkradeinstellfunktion.

Bei den Figuren handelt es sich lediglich um beispielhafte Darstellungen. Gleiche oder ähnliche Bauteile sind dabei mit gleichen Bezugszeichen gekennzeichnet.

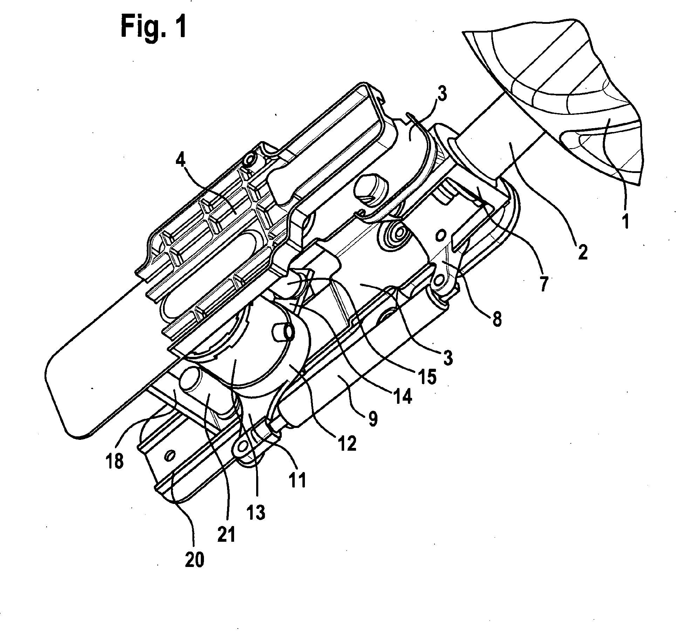

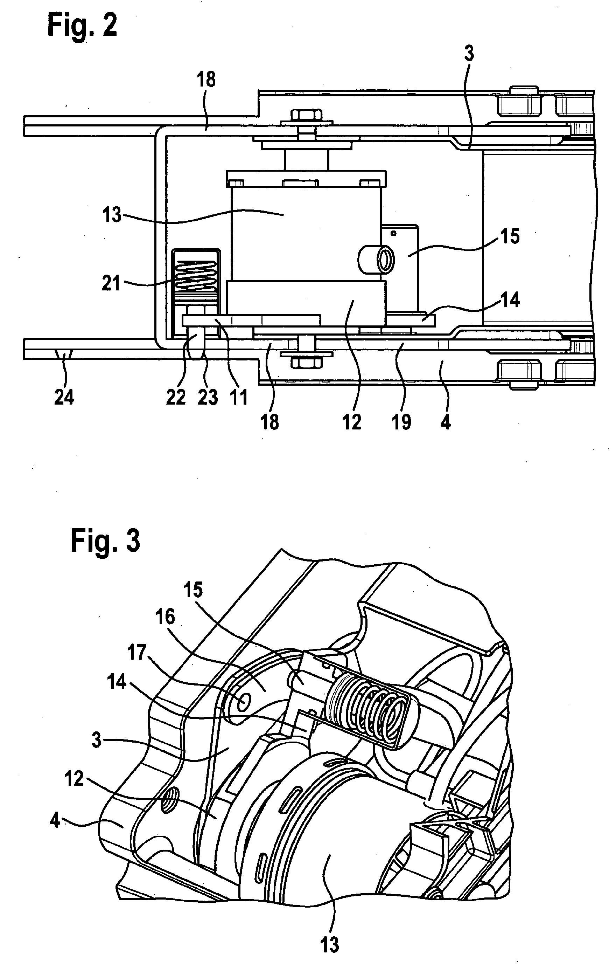

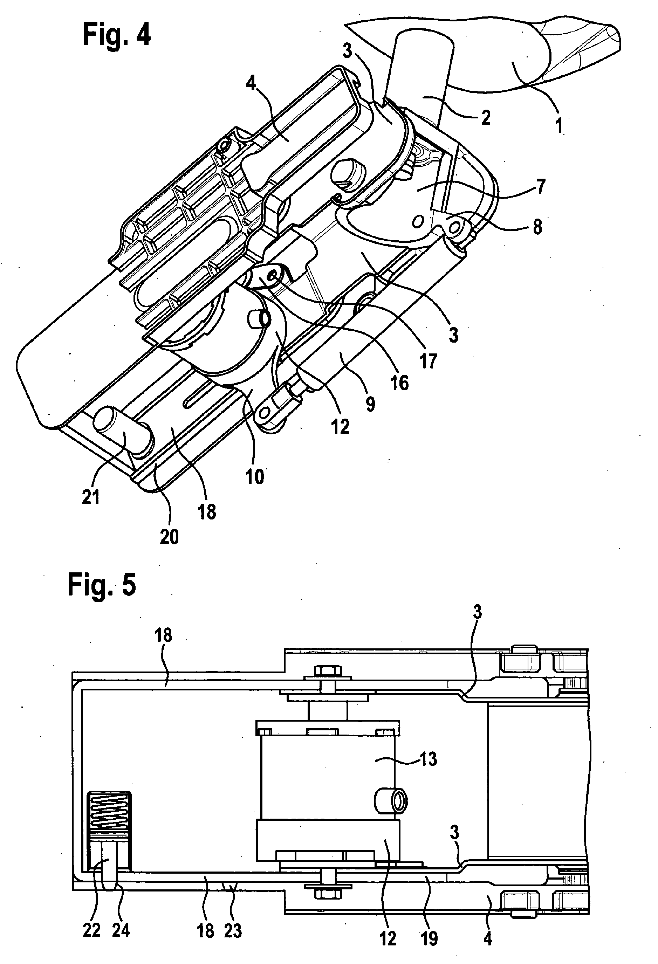

Figur 1 zeigt eine schematische perspektivische Darstellung einer Lenksäule für ein Nutzfahrzeug gemäß einer Ausführungsform der vorliegenden Erfindung in Fahrposition. Figur 2 und Figur 3 zeigen Detaildarstellungen aus Figur 1. Figur 4 zeigt die Lenksäule aus Figur 1 in Parkposition. Figur 5 zeigt ein Detail aus Figur 4 im Schnitt.

In Figur 1 ist in der rechten oberen Zeichnungsecke ein teilweise dargestelltes Lenkrad 1 angeordnet, welches an einer nicht gezeigten Lenkspindel befestigt ist, die in einem Lenkspindelgehäuse 2 drehbar aufgenommen ist. Das Lenkspindelgehäuse 2 ist über ein Schwenkgelenk 7 stufenlos schwenkbar zwischen zwei Enden eines U-förmigen Führungsbleches 3 gelagert. Von dem Schwenkgelenk 7 steht ein erster Hebel 8 nach außen hervor, der mit einer feststellbaren Gasdruckfeder 9 verbunden ist. Das andere Ende der Gasdruckfeder 9 ist mit einem Memoryarm 11 verbunden und über ein nicht dargestelltes Klemmelement in einer gewünschten Neigungsposition des Lenkrads 1 arretierbar.

Der Memoryarm 11 ist dabei an einem ringförmigen Drehrahmen 12 befestigt und steht von diesem hervor. Der Drehrahmen 12 ist konzentrisch zu einem Federpaket 13 angeordnet, welches zwischen den beiden Schenkeln des U-förmigen Führungsblechs 3 angeordnet ist. An dem ringförmigen Drehrahmen 12 ist ferner ein Vorsprung 14 zur Aufnahme eines federbeaufschlagten Rastelements 15 vorgesehen. Der Vorsprung 14 ist dabei dem Memoryarm 11 diametral gegenüberliegend am Drehrahmen 12 angeordnet.

Das Rastelement 15 weist dabei eine nicht gezeigte Einrichtung zum Lösen auf, die im vorliegenden Ausführungsbeispiel pneumatisch betätigbar ist. Insbesondere aus Figur 3 geht die Anordnung des Rastelements 15 hervor, das über einem kreisbogenförmigen Blechstreifen 16 mit zwei Bohrungen 17 zwischen einer in Figuren 1 bis 3 dargestellten Fahrposition und einer Wegschwenkposition verschiebbar und in jeweils einer der beiden Positionen einrastbar ist. Bei gelöstem Rastelement 15 lässt sich der Vorsprung 14 verschieben und damit über den Drehrahmen 12 auch der Memoryarm 11. Da das als Gasdruckfeder 9 ausgeführte längsblockierbare Bindeglied bei diesem Vorgang starr bleibt, d.h. quasi wie eine starre Stange wirkt, wird durch das Wegschwenken des Lenkrads 1, beispielsweise zum Ein- und Aussteigen des Fahrers, die eingestellte Lenkradneigung nicht verändert. Die Lenkradneigung wird nämlich nur durch die festgestellte Länge der Gasdruckfeder 9 bestimmt, die ja bei diesem Vorgang unverändert bleibt. Dies wird auch als Memory-Funktion der Wegschwenkbewegung bezeichnet.

Neben der Wegschwenkfunktion des Lenkrads 1, wird in der gezeigten bevorzugten Ausführungsform der Erfindung auch das Einschieben des Lenkrads 1 beim Ein-und Aussteigen des Fahrers ermöglicht. Hierzu ist ein separates U-förmiges Zwischenblech 18 zwischen Lagerbock 4 und dem ebenfalls U-förmig ausgebildetem Führungsblech 3 vorgesehen. Das Hineinschieben bzw. Ausziehen des Lenkrads 1 erfolgt dabei über ein Langloch 19 im Zwischenblech 18 und eine Führung 20 im Lagerbock 4, in der das Zwischenblech 18 quasi wie ein Schlitten entlang gleitet. Diese Funktion wird mittels eines Federpakets geklemmt, welches das Führungsblech 3 gegen das Zwischenblech 18 klemmt, nicht aber gegen den Lagerock 4, wie dies beim Stand der Technik der Fall ist.

Das Zwischenblech 18 beinhaltet ein federbeaufschlagtes Rastelement 21, welches pneumatisch gelöst werden kann. Dieses Rastelement 21 hält die Position des Zwischenblechs 18 relativ zum Lagerbock 4. Hierdurch lässt sich das Lenkrad 1 von der in Figur 1 gezeigten Fahrposition, bei der sich der Bolzen 22 des Rastelements 21 in einer oberen Bohrung 23 eingerastet befindet, in eine in Figur 4 gezeigte Parkposition einschieben, bei der sich der Bolzen in einer unteren Bohrung 24 eingerastet befindet.

Zum Easy-Entry wird das Rastelement 21 gelöst und das Lenkrad 1 kann durch die Schiebebewegung des Zwischenblechs 18 und des damit über das Federpaket verbundene Führungsblech 3 eingeschoben werden. Beim Rückstellen des Lenkrads 1 in die Fahrposition rastet der Bolzen 22 des Rastelements 21 wieder in der oberen Bohrung 23 ein, ohne dass der voreingestellte Lenkradhub verändert wurde. Dies wird auch als Memory-Funktion der Einschubbewegung bezeichnet.

Dabei ist die Einschiebfunktion des Lenkrads völlig unabhängig von der vorher beschriebenen Wegschwenkfunktion. D.h., das Lenkrad 1 kann entweder nur Eingeschoben bzw. Ausgeschoben werden oder nur Weggeschwenkt werden oder beide Funktionen können, wie in den gezeigten Ausführungsbeispielen nach Figuren 1 bis 5 , gleichzeitig ausgeführt werden.

Die vorliegenden Erfindung beschränkt sich in ihrer Ausführung nicht auf das vorstehend angegebene, bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Lenkrad
- 2: Lenkspindelgehäuse
- 3: Führungsblech
- 4: Lagerbock
- 5: Verschraubung
- 6: Langloch
- 7: Schwenkgelenk
- 8: erster Hebel
- 9: Gasdruckfeder
- 10: zweiter Hebel
- 11: Memoryarm
- 12: Drehrahmen
- 13: Federpaket
- 14: Vorsprung
- 15: Rastelement
- 16: Blechstreifen
- 17: Bohrung
- 18: Zwischenblech
- 19: Langloch
- 20: Führung
- 21: Rastelement
- 22: Bolzen
- 23: obere Bohrung
- 24: untere Bohrung

## Patentansprüche

1. Lenksäule für ein Nutzfahrzeug mit einer in einem Lagerbock (4) aufgenommenen Lenkspindel, an der ein Lenkrad (1) angeordnet ist, wobei im Lagerbock (4) ein Führungsblech (3) zum Einstellen des Lenkradhubs und ein zwischen zwei Führungsblechenden angeordnetes Schwenkgelenk (7) zum Einstellen der Neigung des Lenkrads (1) vorgesehen ist, wobei das Schwenkgelenk (7) mit einem oberen Ende eines längsblockierbaren Bindeglieds (9) gelenkig verbunden ist,
**dadurch gekennzeichnet, dass**
zum Wegschwenken des Lenkrads (1) ein gegenüber dem Führungsblech (3) frei schwenkbarer Memoryarm (11) vorgesehen ist, der von einem ringförmigen, zwischen den beiden Schenkeln des U-förmigen Führungsblechs angeordneten Drehrahmen (12) hervorsteht und der mit dem unteren Ende des längsblockierbaren Bindeglieds (9) gelenkig verbunden ist, und/oder zum Einschieben des Lenkrads (1) ein frei verschiebbares Zwischenblech (18) zwischen Lagerbock (4) und Führungsblech (3) angeordnet ist.

2. Lenksäule nach Patentanspruch 1,
**dadurch gekennzeichnet, dass** der Memoryarm (11) über ein vorzugsweise federbeaufschlagtes Rastelement (15) feststellbar ist.

3. Lenksäule nach Patentanspruch 1,
**dadurch gekennzeichnet, dass** das separate Zwischenblech (18) über ein vorzugsweise federbeaufschlagtes Rastelement (21) feststellbar ist.

4. Lenksäule nach Patentanspruch 2 oder 3,
**dadurch gekennzeichnet, dass** das Rastelement (15, 21) eine Einrichtung zum Lösen aufweist.

5. Lenksäule nach Patentanspruch 4,
**dadurch gekennzeichnet, dass** die Einrichtung zum Lösen des Restelements (15, 21) mechanisch, pneumatisch, elektrisch, hydraulisch oder eine andere geeignete Energieform betätigbar ist.

6. Lenksäule nach einem der vorgenannten Patentansprüche,
**dadurch gekennzeichnet, dass** das Zwischenblech (18) im wesentlichen U-förmig ausgebildet ist und an beiden gegenüberliegenden Innenseiten des Lagerbocks (4) verschiebbar ist.

7. Lenksäule nach einem der vorgenannten Patentansprüche,
**dadurch gekennzeichnet, dass** das Zwischenblech (18) zumindest ein Langloch (19) zum Einstellen des Lenkradhubs aufweist.

8. Lenksäule nach einem der vorgenannten Patentansprüche,
**dadurch gekennzeichnet, dass** der ringförmige Drehrahmen (12) konzentrisch zu einem Federpaket (13) zwischen den Führungsblechen (3) angeordnet ist.

9. Lenksäule nach Patentanspruch 8,
**dadurch gekennzeichnet, dass** an dem ringförmigen Drehrahmen (12) ein Vorsprung (14) zur Aufnahme des Rastelements (15) vorgesehen ist.

10. Lenksäule nach einem der vorgenannten Patentansprüche,
**dadurch gekennzeichnet, dass** das längsblockierbare Bindeglied (9) als blockierbare Gasdruckfeder ausgestaltet ist.

## Claims

1. Steering column for a commercial vehicle having a steering spindle which is received in a bearing block (4) and on which a steering wheel (1) is arranged, a guide plate (3) being provided in the bearing block (4) for setting the steering wheel stroke and a pivoting joint (7) which is arranged between two guide-plate ends being provided for setting the inclination of the steering wheel (1), the pivoting joint (7) being connected in an articulated manner to an upper end of a link element (9) which can be blocked longitudinally, **characterized in that**, in order to pivot the steering wheel (1) away, a memory arm (11) is provided which can be pivoted freely with respect to the guide plate (3), projects from an annular rotary frame (12) which is arranged between the two limbs of the U-shaped guide plate, and which is connected in an articulated manner to the lower end of the link element (9) which can be blocked longitudinally, and/or, in order to push the steering wheel (1) in, a freely displaceable intermediate plate (18) is arranged between the bearing block (4) and the guide plate (3).

2. Steering column according to Patent Claim 1,
**characterized in that** the memory arm (11) can be fixed via a preferably spring-loaded latching element (15).

3. Steering column according to Patent Claim 1,
**characterized in that** the separate intermediate plate (18) can be fixed via a preferably spring-loaded latching element (21).

4. Steering column according to Patent Claim 2 or 3, **characterized in that** the latching element (15, 21) has a release device.

5. Steering column according to Patent Claim 4, **characterized in that** the device for releasing the latching element (15, 21) can be actuated mechanically, pneumatically, electrically, hydraulically or by another suitable energy form.

6. Steering column according to one of the preceding patent claims, **characterized in that** the intermediate plate (18) is of substantially U-shaped configuration and can be displaced on both inner sides of the bearing block (4) which lie opposite one another.

7. Steering column according to one of the preceding patent claims, **characterized in that** the intermediate plate (18) has at least one slot (19) for setting the steering wheel stroke.

8. Steering column according to one of the preceding patent claims, **characterized in that** the annular rotary frame (12) is arranged concentrically with respect to a spring assembly (13) between the guide plates (3).

9. Steering column according to Patent Claim 8, **characterized in that** a projection (14) for receiving the latching element (15) is provided on the annular rotary frame (12).

10. Steering column according to one of the preceding patent claims, **characterized in that** the link element (9) which can be blocked longitudinally is designed as a gas-pressure spring which can be blocked.

## Revendications

1. Colonne de direction pour un véhicule utilitaire comprenant une broche de direction reçue dans un coussinet (4), sur laquelle est disposé un volant de direction (1), une tôle de guidage (3) étant prévue dans le coussinet (4) pour ajuster la course du volant de direction et une articulation pivotante (7) disposée entre deux extrémités de la tôle de guidage étant prévue pour ajuster l'inclinaison du volant de direction (1), l'articulation pivotante (7) étant connectée de manière articulée à une extrémité supérieure d'un organe de liaison (9) pouvant être bloqué en longueur,
**caractérisée en ce que**
pour écarter par pivotement le volant de direction (1), on prévoit un bras à mémoire (11) pouvant pivoter librement par rapport à la tôle de guidage (3), qui dépasse d'un cadre rotatif (12) annulaire, disposé entre les deux branches de la tôle de guidage en forme de U, et qui est connecté de manière articulée à l'extrémité inférieure de l'organe de liaison (9) pouvant être bloqué en longueur, et/ou une tôle intermédiaire (18) librement déplaçable est disposée entre le coussinet (4) et la tôle de guidage (3) pour enclencher le volant de direction (1).

2. Colonne de direction selon la revendication 1, **caractérisée en ce que** le bras à mémoire (11) peut être réglé par le biais d'un élément d'encliquetage (15) sollicité de préférence par un ressort.

3. Colonne de direction selon la revendication 1,
**caractérisée en ce que** la tôle intermédiaire séparée (18) peut être réglée par le biais d'un élément d'encliquetage (21) sollicité de préférence par un ressort.

4. Colonne de direction selon la revendication 2 ou 3,
**caractérisée en ce que** l'élément d'encliquetage (15, 21) présente un dispositif de desserrage.

5. Colonne de direction selon la revendication 4,
**caractérisée en ce que** le dispositif pour desserrer l'élément d'encliquetage (15, 21) peut être actionné de manière mécanique, pneumatique, électrique, hydraulique ou par une autre forme d'énergie appropriée.

6. Colonne de direction selon l'une quelconque des revendications précédentes,
**caractérisée en ce que** la tôle intermédiaire (18) est réalisée essentiellement en forme de U et peut être déplacée au niveau des deux côtés internes opposés du coussinet (4).

7. Colonne de direction selon l'une quelconque des revendications précédentes,
**caractérisée en ce que** la tôle intermédiaire (18) présente au moins un trou oblong (19) pour ajuster la course du volant de direction.

8. Colonne de direction selon l'une quelconque des revendications précédentes,
**caractérisée en ce que** le cadre rotatif annulaire (12) est disposé de manière concentrique à un groupe de ressorts (13) entre les tôles de guidage (3).

9. Colonne de direction selon la revendication 8,
**caractérisée en ce qu'**une saillie (14) est prévue sur le cadre rotatif annulaire (12) pour recevoir l'élément d'encliquetage (15).

10. Colonne de direction selon l'une quelconque des revendications précédentes,
**caractérisée en ce que** l'organe de liaison (9) pouvant être bloqué en longueur est réalisé sous forme de ressort de pression à gaz pouvant être bloqué.
